# EUROPEAN PATENT APPLICATION

(11) **EP 4 395 479 A1**
(43) Date of publication of application: **03.07.2024**
(21) Application number: 22861289.1
(22) Date of filing: 22.08.2022
(51) Int. Cl.: H05K 5/02, H01M 50/244, H01M 50/289, H01M 50/296, H01M 50/55

(54) **ELECTRONIC DEVICE**

(30) Priority: 23.08.2021 JP 2021135835
(71) Applicant: Eagle Industry Co., Ltd., Minato-ku Tokyo 105-8587 (JP)
(72) Inventor: OCHI Satoshi, Tokyo 105-8587 (JP); YAMAMOTO Kentaro, Toyonaka City, Osaka 5600035 (JP)
(74) Representative: WSL Patentanwälte Partnerschaft mbB
(86) International application number: PCT/JP2022/031492
(87) International publication number: WO 2023/027001

(57) **Abstract**

Provided is an electronic device that achieves both stability of electrical contact between terminals and sealing performance. A power supply unit 101 includes a power supply adjustment board 10 and a holder 100 that holds the power supply adjustment board 10, an accommodation member 20 that accommodates the power supply unit 101 inserted from an opening 20a, and a cap member 23 that closes the opening 20a, wherein a positive electrode terminal 42 and a negative electrode terminal 43 are arranged side by side in the accommodation member 20, a positive electrode terminal 14 and a negative electrode terminal 15 are arranged side by side on one end side in the power supply unit 101, a locking mechanism P that locks the power supply unit 101 is provided in the accommodation member 20 such that the positive electrode terminal 14 and the negative electrode terminal 15 of the power supply unit 101 are brought into electrical contact with the positive electrode terminal 42 and the negative electrode terminal 43 of the accommodation member 20, and power supply lines 27 and 29 are disposed to penetrate the cap member in a sealed state and configured for connecting an external power supply to the power supply adjustment board 10.

## Description

### {TECHNICAL FIELD}

The present invention relates to an electronic device, for example, an electronic device which is capable of using external power supply.

### {BACKGROUND ART}

An electronic device using an external power supply as a power supply is supplied with power from the external power supply by connecting a power plug, etc. to the external power supply. In addition, an electronic device using a battery as a power supply is supplied with power from the battery by accommodating the battery inside the electronic device. Conventionally, there has been known an electronic device capable of selectively using an external power supply or a battery as a power supply according to an installation location, a usage environment, etc. of the electronic device.

For example, an electronic device disclosed in Patent Citation 1 includes a power supply accommodation portion capable of accommodating a battery or a power adapter, and a rotating opening/closing lid is provided near an opening of the power supply accommodation portion. The power adapter has the same external dimensions and shape as those of a rectangular parallelepiped nickel-cadmium battery that can be used in the electronic device of Patent Citation 1, and is provided with a positive electrode terminal on one end side and a negative electrode terminal on the other end side. A positive electrode terminal touched by a positive electrode of the battery or the positive electrode terminal of the power adapter is provided on a back surface of the opening/closing lid. In addition, a negative electrode terminal touched by a negative electrode of the battery or a negative electrode terminal of the power adapter is provided on a bottom surface of the power supply accommodation portion. That is, by accommodating the battery or the power adapter in the power supply accommodation portion and closing the opening/closing lid, the battery or the power adapter is pressed by the opening/closing lid, and the positive electrode and the negative electrode of the battery or the positive electrode terminal and the negative electrode terminal of the power adapter are pressed against the positive electrode terminal provided on the back surface of the opening/closing lid and the negative electrode terminal provided on the bottom surface of the power supply accommodation portion, respectively.

In addition, a jack for supply of the external power supply is provided on a side surface of the power adapter. A hole communicating with the outside is provided on a side surface of the power supply accommodation portion. This hole matches a position of the jack provided on the side surface of the power adapter accommodated in the power supply accommodation portion. In this way, by inserting a plug from the hole provided on the side surface of the power supply accommodation portion, the plug is connected to the jack provided on the side surface of the power adapter inside the power supply accommodation portion, and power can be supplied from the external power supply to the power adapter.

### {CITATION LIST}

### {Patent Literature}

Patent Citation 1: Microfilm of Japanese Utility Model Application No. 62-91664 (JP S63-200297 U) (Pages 4 to 6, FIG. 1)

### {SUMMARY OF INVENTION}

### {Technical Problem}

In the electronic device of Patent Citation 1, by closing the rotating opening/closing lid to press the battery or the power adapter, movement of the battery or the power adapter in the power supply accommodation portion is regulated, and electrical contact is ensured between the positive electrode terminal provided on the back surface of the opening/closing lid and the negative electrode terminal provided on the bottom surface of the power supply accommodation portion. However, with such an opening/closing lid, it has not been possible to close the power supply accommodation portion to sufficiently improve sealing performance. In addition, on the side surface of the power supply accommodation portion, a hole for connecting the external power supply to the jack of the power adapter accommodated in the power supply accommodation portion is provided, and there has been concern that a liquid, vapor, etc. may enter the power supply accommodation portion from the hole.

The present invention has been made by paying attention to such a problem, and an object of the present invention is to provide an electronic device that achieves both stability of electrical contact between terminals and sealing performance.

### {Solution to Problem}

In order to solve the foregoing problem, an electronic device according to the present invention is an electronic device including a power supply unit including a power supply adjustment board and a holder that holds the power supply adjustment board; an accommodation member that accommodates the power supply unit inserted from an opening of the accommodation member; and a cap member that closes the opening of the accommodation member, wherein a positive electrode terminal and a negative electrode terminal are arranged side by side in the accommodation member, a positive electrode terminal and a negative electrode terminal are arranged side by side on one end side in the power supply unit, the electronic device further includes: a locking mechanism that locks the power supply unit in the accommodation member while the positive electrode terminal and the negative electrode terminal of the power supply unit are brought into electrical contact with the positive electrode terminal and the negative electrode terminal of the accommodation member; and a power supply line disposed to penetrate the cap member in a sealed state and configured for connecting an external power supply to the power supply adjustment board. According to the aforesaid feature of the present invention, by locking the power supply unit in the accommodation member using the locking mechanism, it is possible to ensure a state in which the positive electrode terminal and the negative electrode terminal of the power supply unit are brought into electrical contact with the positive electrode terminal and the negative electrode terminal of the accommodation member. In addition, while the inside of the accommodation member in which the power supply unit is accommodated is set to a sealed space by closing the opening of the accommodation member with the cap member, the external power supply can be connected to the power supply adjustment board accommodated in the accommodation member by the power supply line penetrating the cap member in a sealed state. Therefore, it is possible to achieve both stability of electrical contact between the terminals and sealing performance.

It may be preferable that the power supply adjustment board is detachably held by the holder while being fixed to a mounting member on which the positive electrode terminal and the negative electrode terminal of the power supply unit are provided. According to this preferable configuration, the power supply adjustment board can be protected by the mounting member.

It may be preferable that the mounting member is attached to the holder in a direction perpendicular to a direction in which the holder is inserted into the accommodation member. According to this preferable configuration, a state in which the positive electrode terminal and the negative electrode terminal of the power supply unit are brought into electrical contact with the positive electrode terminal and the negative electrode terminal of the accommodation member is reliably maintained.

It may be preferable that at least a part of the power supply line is flexible. According to this preferable configuration, when the cap member is attached and detached, the power supply line is bent, so that it is possible to suppress occurrence of poor contact with the power supply adjustment board, and workability of attaching and detaching the cap member is excellent.

It may be preferable that the holder has a grip portion. According to this preferable configuration, by removing the cap member and gripping the grip portion of the holder, the power supply unit can be easily removed from a state in which the power supply unit is locked in the accommodation member.

Another electronic device according to the present invention is an electronic device including a power supply unit including a holder and a power supply section held by the holder; an accommodation member that accommodates the power supply unit inserted from an opening of the accommodation member; and a cap member that closes the opening of the accommodation member, wherein a positive electrode terminal and a negative electrode terminal are arranged side by side in the accommodation member, a positive electrode terminal and a negative electrode terminal are arranged side by side on one end side in the power supply unit, the electronic device further includes a locking mechanism that locks the power supply unit in the accommodation member while the positive electrode terminal and the negative electrode terminal of the power supply unit are brought into electrical contact with the positive electrode terminal and the negative electrode terminal of the accommodation member, and the power supply section has a power supply adjustment board to which a battery or an external power supply is connected. According to this preferable configuration, by locking the power supply unit in the accommodation member using the locking mechanism, it is possible to ensure a state in which the positive electrode terminal and the negative electrode terminal of the power supply unit are brought into electrical contact with the positive electrode terminal and the negative electrode terminal of the accommodation member. In addition, by closing the opening of the accommodation member with the cap member, the inside of the accommodation member in which the power supply unit is accommodated can be set to a sealed space. Therefore, it is possible to provide the electronic device achieving both stability of electrical contact between the terminals and sealing performance. In addition, it is possible to selectively use the battery or the external power supply as a power supply according to an installation location, a usage environment, etc.

It may be preferable that the power supply section includes the battery and a spacer corresponding to a shape of the battery. According to this preferable configuration, by using the spacer corresponding to the shape of the battery used in the power supply unit, it becomes possible to hold the battery and the spacer having different shapes by the holder, and the positive electrode terminal and the negative electrode terminal of the power supply unit arranged side by side can be brought into contact with the positive electrode terminal and the negative electrode terminal of the accommodation member.

### {BRIEF DESCRIPTION OF DRAWINGS}

FIGS. 1A and 1B are perspective views illustrating a pressure sensor as an electronic device according to a first embodiment of the present invention.
FIG. 2 is a cross-sectional view illustrating a structure of the pressure sensor of the first embodiment.
FIG. 3 is a perspective view illustrating a structure of an inner case and a holder. For convenience of description, FIG. 3 illustrates a state in which an outer case is removed.
FIG. 4 is a perspective view illustrating a structure of the inner case. For convenience of description, FIG. 4 illustrates a state in which the outer case is removed.
FIG. 5 is a cross-sectional view taken along line A-A of FIG. 2.
FIG. 6A is an exploded perspective view illustrating a structure of a power supply unit of the first embodiment, and FIG. 6B is a perspective view of the same.
FIG. 7 is a perspective view illustrating a structure of a mounting member of the first embodiment.
FIGS. 8A and 8B are perspective views illustrating a pressure sensor as an electronic device according to a second embodiment of the present invention.
FIG. 9 is a cross-sectional view illustrating a structure of the pressure sensor of the second embodiment.
FIG. 10 is a perspective view illustrating a pressure sensor as an electronic device according to a third embodiment according to the present invention.
FIG. 11 is a cross-sectional view illustrating a structure of the pressure sensor of the third embodiment.
FIG. 12A is an exploded perspective view illustrating a structure of a power supply unit of the third embodiment, and FIG. 12B is a perspective view of the same.

### {DESCRIPTION OF EMBODIMENTS}

Modes to implementing an electronic device according to the present invention will be described on the basis of the embodiments.

### {First embodiment}

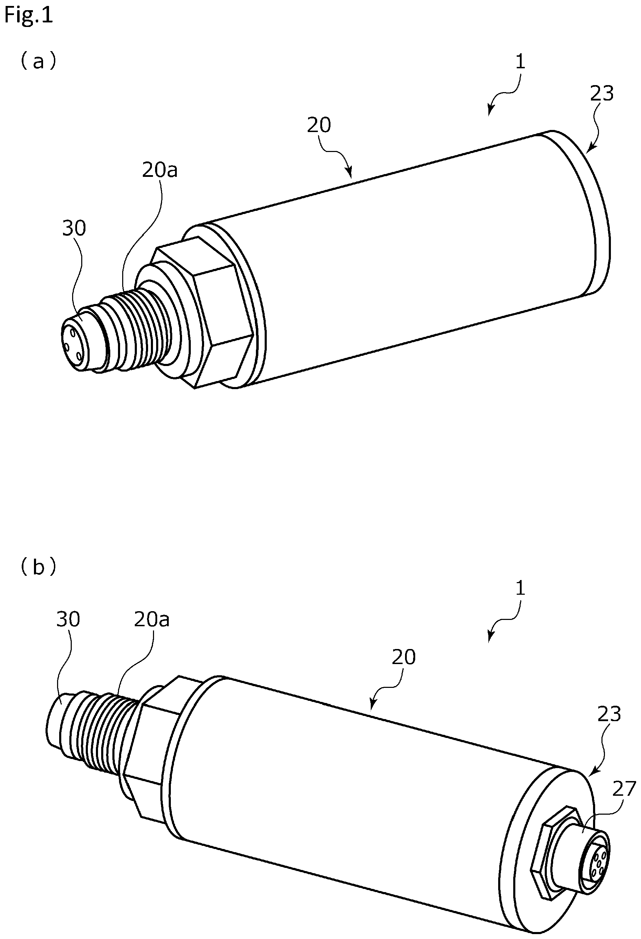

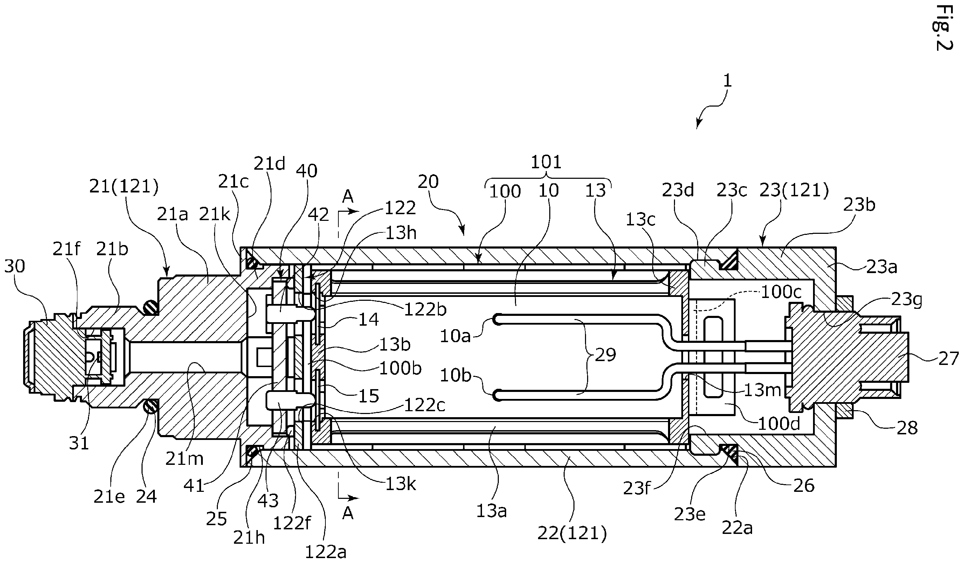

An electronic device according to a first embodiment of the present invention will be described with reference to FIGS. 1 to 7. In the following description, left and right sides seen from a front side of FIG. 2 will be described as left and right sides of the electronic device. Specifically, a left side of a paper surface where a sensor unit 30 is provided is described as a left side of the electronic device, and a right side of the paper surface where a cap member 23 is attached is described as a right side of the electronic device.

As illustrated in FIG. 1, the electronic device according to the first embodiment of present invention is a pressure sensor 1 that is configured to be capable of detecting pressure, which is a measurement object, and uses an external power supply (not illustrated) as a power supply. The pressure sensor 1 is fixed to an installed portion such as a pipe, a duct, or a tank (not illustrated), and detects the pressure, which is the measurement object, inside the installed portion. The measurement object is a fluid such as a liquid or a gas.

As illustrated in FIG. 1, the pressure sensor 1 mainly includes a housing 20 as an accommodation member, the sensor unit 30, a holder 100 (see FIG. 2), and a circuit unit 40 (see FIG. 2). The sensor unit 30 is attached to a left end of the housing 20. The holder 100 is accommodated in the housing 20 through an opening formed at a right end of the housing 20 (specifically, an opening 22a of a cover member 22, which will be described later). Note that an opening of the housing 20 is closed by the cap member 23. In addition, the holder 100 holds a mounting member 13 to which a power supply adjustment board 10 serving as a power supply section is fixed. That is, in the first embodiment, the power supply section includes the power supply adjustment board 10 and the mounting member 13. In addition, the power supply adjustment board 10 has a converter circuit that adjusts a voltage supplied from the external power supply.

The pressure sensor 1 is used by being fixed by, for example, screwing a screw portion 20a in the housing 20 into a mounting port of a pipe (not illustrated). Note that the screw portion 20a may be formed at a left end on an outer peripheral surface of the housing 20. In this way, a sensor element (not illustrated) provided in the sensor unit 30 outputs a voltage corresponding to pressure applied from a fluid, which is a measurement object, in the pipe. A processing chip 31 (see FIG. 2) converts this voltage into a pressure signal.

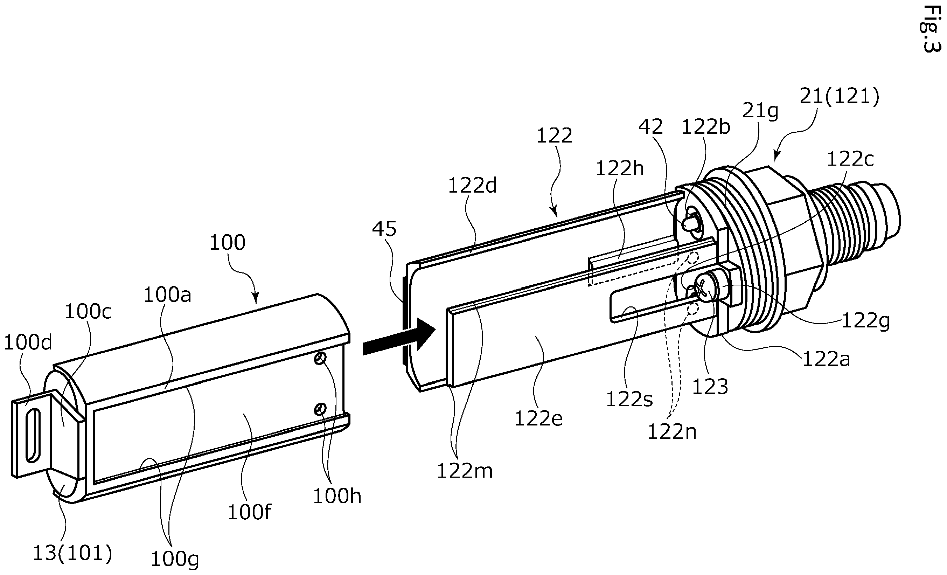

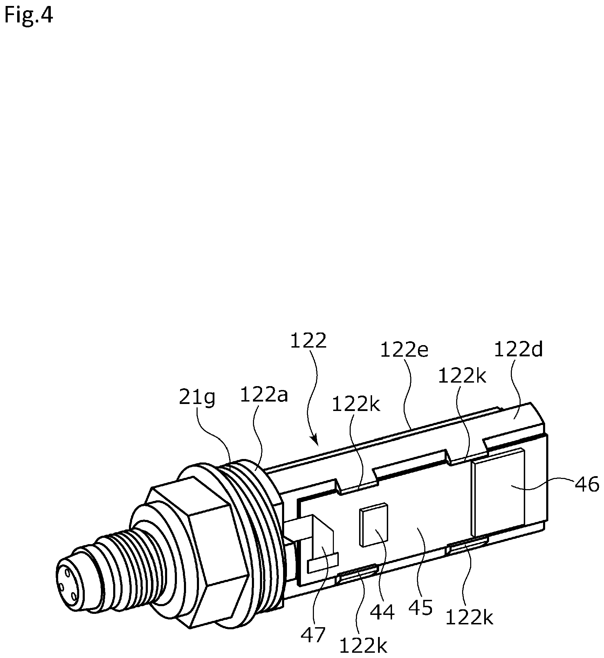

As illustrated in FIG. 2, the housing 20 includes an outer case 121 and an inner case 122 (see FIGS. 3 and 4). The outer case 121 includes a connection member 21, a cover member 22, and the cap member 23. The screw portion 20a (see FIG. 1) is formed at a left end of the connection member 21. The cover member 22 is attached to a right end of the connection member 21. The opening 22a on a right side of the cover member 22 is closed by the cap member 23. The inner case 122 is fixed to the connection member 21 and covered with the cover member 22 and the cap member 23.

As illustrated in FIG. 2, the connection member 21 includes a cylindrical base 21a, a small diameter portion 21b extending leftward from the base 21a, a flange portion 21c protruding radially outward from a right end of an outer peripheral surface of the base 21a, and a large diameter portion 21d extending rightward from the base 21a.

The small diameter portion 21b has the aforementioned screw portion 20a (see FIG. 1) formed on an outer peripheral surface thereof. In addition, an annular recess 21e is formed at a right end on the outer peripheral surface of the small diameter portion 21b, and an O-ring 24 is attached to the recess 21e. Note that, by screwing the screw portion 20a formed on the outer peripheral surface of the small diameter portion 21b into the mounting port (not illustrated) of the pipe (not illustrated), the O-ring 24 is compressed between the pipe and the connection member 21, and sealing performance is ensured.

A recess 21f recessed to the right is formed at a left end of the small diameter portion 21b, and the sensor unit 30 is inserted into the recess 21f from the left and fixed by welding. Although details are omitted, sealing performance is ensured so that the fluid, which is the measurement object, does not enter a through hole 21m side where the processing chip 31 is disposed.

The large diameter portion 21d has a screw portion 21g (see FIGS. 3 and 4) formed on an outer peripheral surface thereof. In addition, an annular recess 21h is formed at a left end on the outer peripheral surface of the large diameter portion 21d, and an O-ring 25 is attached to the recess 21h. Note that, by screwing a screw portion (not illustrated) formed on an inner peripheral surface of the left end of the cover member 22 to the screw portion 21g formed on the outer peripheral surface of the large diameter portion 21d, the O-ring 25 is compressed between the connection member 21 and the cover member 22, and sealing performance is ensured.

A stepped recess 21k recessed leftward is formed at a right end of the large diameter portion 21d, and a part of the circuit unit 40 is accommodated in this recess 21k. Note that the recess 21f formed in the small diameter portion 21b and the recess 21k formed in the large diameter portion 21d communicates with each other by the through hole 21m penetrating the base 21a in a left-right direction. In addition, the sensor unit 30 and the circuit unit 40 are electrically connected by a flexible printed wiring board (not illustrated) extending through the through hole 21m.

Here, the circuit unit 40 will be described. As illustrated in FIG. 2, the circuit unit 40 mainly includes a disc-shaped circuit board 41, a positive electrode terminal 42, a negative electrode terminal 43, and a rectangular board-shaped circuit board 45 (see FIG. 4) on which a processing chip 44 and a wireless chip 46 are mounted. The circuit board 41 is accommodated in the recess 21k of the large diameter portion 21d in the connection member 21. The positive electrode terminal 42 and the negative electrode terminal 43 are arranged side by side through the circuit board 41 in a thickness direction. The circuit board 45 is held on an outer surface of a first plate 122d of the inner case 122, which will be described later. The processing chip 44 adjusts power supplied from the power supply adjustment board 10 connected to the external power supply, and processes a signal input from the sensor unit 30. The wireless chip 46 is provided on the circuit board 45 and communicates with the outside. Note that the circuit board 41 and the circuit board 45 are electrically connected by a flexible flat cable 47. Moreover, the positive electrode terminal 42 and the negative electrode terminal 43 do not have to penetrate the circuit board 41 in the thickness direction. In addition, in the first embodiment, a positive electrode terminal and a negative electrode terminal of the housing 20, which is an accommodation member, are the positive electrode terminal 42 and the negative electrode terminal 43 of the circuit unit 40.

As illustrated in FIGS. 2 and 3, the positive electrode terminal 42 and the negative electrode terminal 43 are so-called probe pins, and have urging means (not illustrated). Electrical contact points of the positive electrode terminal 42 and the negative electrode terminal 43 are stretchable in an axial direction and urged in an extending direction. Specifically, the positive electrode terminal 42 and the negative electrode terminal 43 are inserted into through holes 122b and 122c penetrating a base 122a of the inner case 122 in the thickness direction and formed side by side, and are supported so that the positive electrode terminal 42 and the negative electrode terminal 43 can contract leftward while the electrical contact points protrude from the through holes 122b and 122c, respectively. Note that, as illustrated in FIG. 2, while the holder 100 is attached, the positive electrode terminal 42 and the negative electrode terminal 43 slightly contract leftward. That is, the positive electrode terminal 42 and the negative electrode terminal 43 are elastically and electrically in contact with a positive electrode terminal 14 and a negative electrode terminal 15 provided on the mounting member 13 held by the holder 100, respectively.

In this manner, the positive electrode terminal 14 and the negative electrode terminal 15 of the mounting member 13 held by the holder 100 are brought into contact with the positive electrode terminal 42 and the negative electrode terminal 43, so that the circuit unit 40 can supply power from the external power supply to the sensor unit 30. In addition, the circuit unit 40 can receive input of a pressure signal from the sensor unit 30, process the signal by the processing chip 44, and communicate with the outside by the wireless chip 46.

As illustrated in FIG. 2, the cover member 22 included in the outer case 121 has a cylindrical shape, and is attached in a substantially sealed manner by a left end thereof being screwed to the screw portion 21g (see FIGS. 3 and 4) formed on the outer peripheral surface of the large diameter portion 21d of the connection member 21. In addition, a screw portion 23d of the cap member 23, which is also included in the outer case 121, is screwed to a right end of the cover member 22, so that the opening 22a is closed in a substantially sealed manner.

Specifically, the cap member 23 includes a disc-shaped base 23a, a large diameter portion 23b protruding leftward from a left side surface of the base 23a, and a small diameter portion 23c protruding leftward from an inner diameter side of a left end surface of the large diameter portion 23b. The screw portion 23d is formed on the outer peripheral surface of the small diameter portion 23c. In addition, an annular recess 23e is formed at the right end on the outer peripheral surface of the small diameter portion 23c, and an O-ring 26 is attached to this recess 23e. Note that, by screwing the screw portion 23d of the cap member 23 to a screw portion (not illustrated) formed on the inner peripheral surface of the right end of the cover member 22, the O-ring 26 is compressed between the cover member 22 and the cap member 23, and sealing performance is ensured.

In addition, a through hole 23g penetrating the base 23a in the left-right direction is formed thereon, and a waterproof connector 27 (see FIG. 1) serving as a power supply line is inserted through the through hole 23g from the left side. The connector 27 is rotatable relative to the cap member 23. Further, the connector 27 is fixed to the cap member 23 in a substantially sealed manner by screwing a waterproof nut 28 to a screw portion (not illustrated) formed on the outer peripheral surface of the connector 27 from the right side while the connector 27 is inserting into the through hole 23g. In this way, internal space of the housing 20 in which the holder 100 is accommodated is partitioned in a substantially sealed manner.

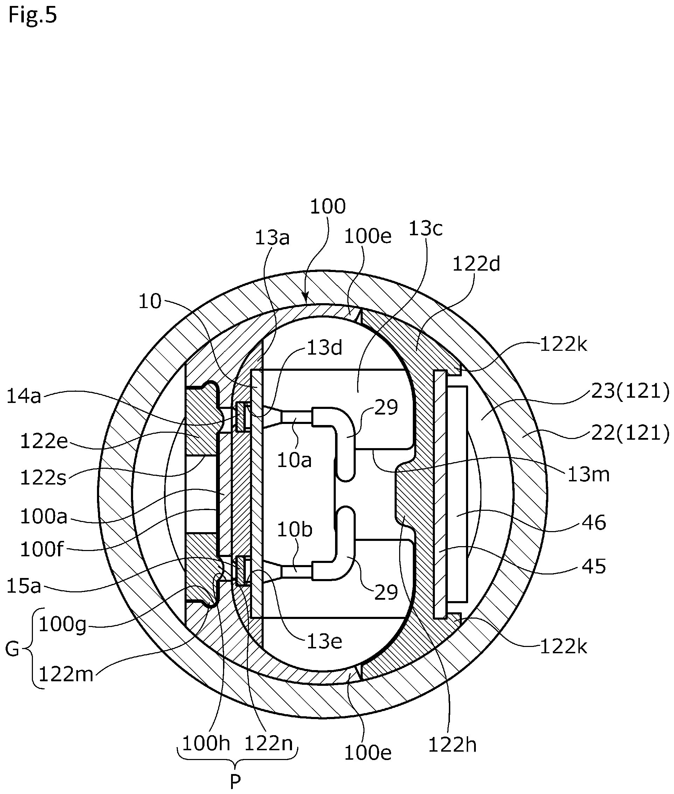

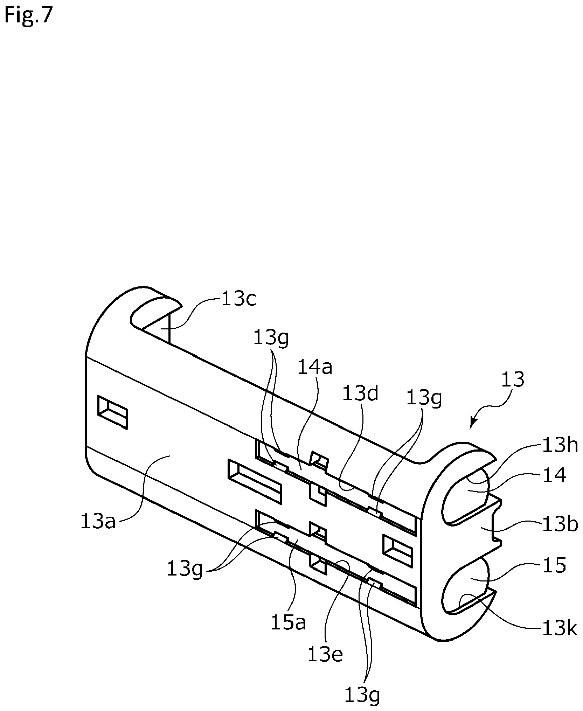

Note that the connector 27 is electrically connected to a pair of upper and lower terminals 10a and 10b provided substantially horizontally in a center of the power supply adjustment board 10 by electric wires 29 serving as power supply lines, respectively. Note that the terminal 10a of the power supply adjustment board 10 is electrically connected to the positive electrode terminal 14 of the mounting member 13 through a converter circuit (not illustrated). The terminal 10b of the power supply adjustment board 10 is electrically connected to the negative electrode terminal 15 of the mounting member 13 (see FIGS. 5 and 7). That is, the pressure sensor 1 can supply power from the external power supply to the sensor unit 30 by connecting a male connector (not illustrated) connected to the external power supply to the connector 27.

In addition, a recess 23f recessed rightward is formed at a left end of the cap member 23, and a grip portion 100d formed at a right end of the holder 100 or a left end of the connector 27 are accommodated in the recess 23f.

As illustrated in FIGS. 2 to 5, the inner case 122 is formed of a resin material, and includes the base 122a and a first plate 122d and a second plate 122e extending from the base 122a in a direction in which the cap member 23 is disposed, that is, rightward (leftward in FIG. 3). The base 122a of the inner case 122 is fixed to the connection member 21 by a screw 123 (see FIG. 3).

The through holes 122b and 122c are formed side by side in the base 122a as described above. Further, as illustrated in FIG. 2, a plurality of projections 122f protruding leftward is formed on an outer diameter side on a left surface of the base 122a. When the inner case 122 is fixed to the connection member 21, these projections 122f sandwich an outer diameter portion of the circuit board 41 included in the circuit unit 40 by tips thereof in the left-right direction between stepped portions formed inside the recess 21k of the connection member 21. In this way, the circuit board 41 can be stably supported between the inner case 122 and the connection member 21 (see FIG. 2).

In addition, a boss 122g having a through hole into which the screw 123 is inserted is provided on a right surface (a left surface in FIG. 3) of the base 122a.

As illustrated in FIGS. 3 and 5, the first plate 122d has a curved inner surface. In addition, a rectangular projection 122h is formed at a left end (a right end in FIG. 3) on an inner surface of the first plate 122d.

In addition, as illustrated in FIGS. 4 and 5, an outer surface of the first plate 122d forms a flat surface at a substantially vertically central portion, and a pair of upper and lower hook-shaped protrusions 122k capable of holding the circuit board 45 included in the circuit unit 40 is provided at each of two locations in the horizontal direction on upper and lower ends. Note that the circuit board 45 is inserted between the upper and lower protrusions 122k from a right side of the first plate 122d. Further, upper and lower side surfaces of the first plate 122d are curved along the inner peripheral surface of the cover member 22 included in the outer case 121.

As illustrated in FIGS. 3 and 5, the second plate 122e is formed to have dimensions smaller than those of the first plate 122d in a vertical direction, that is, in a lateral direction. Further, on the second plate 122e, a pair of ridges 122m is formed to extend along the left-right direction, which is a direction in which the holder 100 is inserted and removed, that is, a longitudinal direction, on inner surface sides of upper and lower ends. Note that each of the ridges 122m has a semicircular cross section.

In addition, a pair of upper and lower semispherical projections 122n is formed at a right end (a left end in FIG. 3) on an inner surface of the second plate 122e.

In addition, the second plate 122e has a substantially rectangular notch 122s formed at a substantially vertically central portion of a right end (a left end in FIG. 3). Note that, by forming the notch 122s on the second plate 122e, a tool such as a screwdriver is prevented from interfering with the second plate 122e. In this way, the screw 123 is easily locked in a through hole of the boss 122g formed on the base 122a.

Next, the holder 100 will be described. Note that, in the first embodiment, a description will be given of a mode in which the mounting member 13 is held in a state in which the positive electrode terminal 14 and the negative electrode terminal 15 of the mounting member 13 to which the power supply adjustment board 10 is fixed are arranged side by side at one end of the holder 100 in the longitudinal direction. Further, in the first embodiment, the holder 100 is included in a power supply unit 101 by holding the mounting member 13 to which the power supply adjustment board 10 is fixed. Further, in the first embodiment, a positive electrode terminal and a negative electrode terminal of the power supply unit 101 are the positive electrode terminal 14 and the negative electrode terminal 15 of the mounting member 13.

As illustrated in FIGS. 2, 5, and 6A, the holder 100 mainly includes a base 100a, walls 100b and 100c, and a grip portion 100d. The base 100a has a curved inner surface. The wall 100b is formed in a substantially triangular shape rising from a left end of the base 100a toward an inner surface side. The wall 100c is formed in a rectangular shape rising from a right end of the base 100a toward the inner surface side. The grip portion 100d bends and extends rightward from the wall 100c.

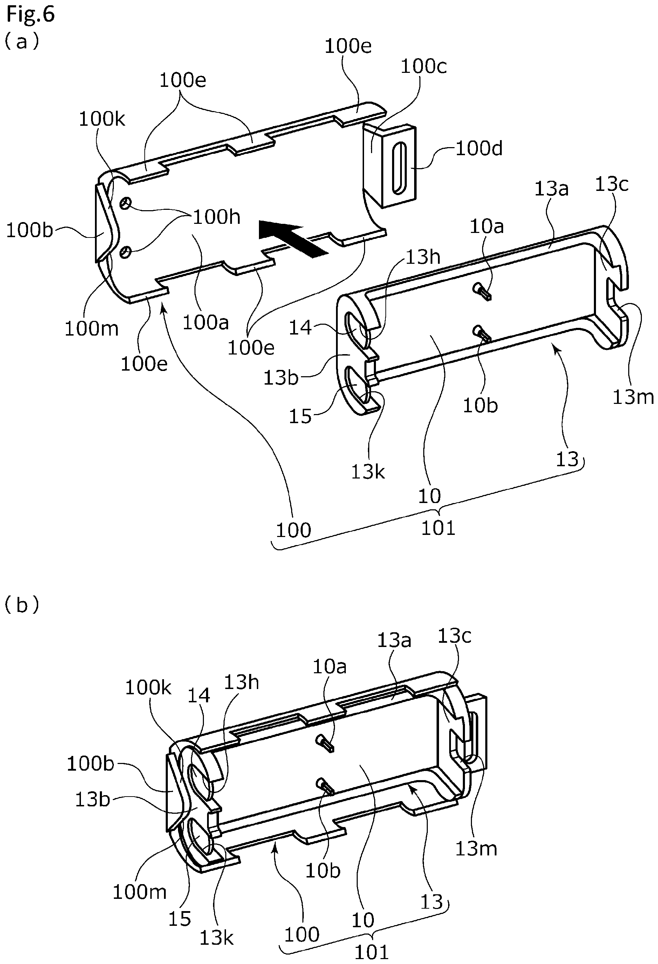

As illustrated in FIGS. 6A and 6B, the wall 100b has the substantially triangular shape, and abuts on one end of the mounting member 13 in the longitudinal direction, that is, a wall 13b of the mounting member 13, which will be described later while the mounting member 13 is held by the holder 100. In this way, the positive electrode terminal 14 and the negative electrode terminal 15 of the mounting member 13 are exposed from notch-shaped spaces 100 k and 100 m of the holder 100. Note that, as long as each of the positive electrode terminal 42 and the negative electrode terminal 43 can be inserted, and the positive electrode terminal 14 and the negative electrode terminal 15 of the mounting member 13 can be exposed to be able to contact with the positive electrode terminal 42 and the negative electrode terminal 43, respectively, the wall 100b may be freely configured in shape, a through hole may be formed in the wall instead of the notch shape.

A pair of upper and lower claws 100e is provided at each of three locations in the left-right direction at upper and lower ends of the base 100a. In the first embodiment, the mounting member 13 is held by the pair of upper and lower claws 100e each provided on both left and right ends.

Further, as illustrated in FIG. 5, an outer surface of the base 100a forms a flat surface at a substantially vertically central portion, and an insertion recess 100f is formed thereon. The insertion recess 100f opens to a left side (a right side in FIG. 3) where the wall 100b is formed, so that the second plate 122e of the inner case 122 can be inserted from the right side (the left side in FIG. 3). A pair of recessed grooves 100g extending in the left-right direction, which is a direction in which the holder 100 is inserted and removed, and facing each other in the vertical direction, that is, the lateral direction, is formed on inner surface sides of upper and lower inner walls of the insertion recess 100f. Note that the recessed grooves 100g each have a semicircular cross section, and form a pair of guide portions G that guide movement of the holder 100 in the insertion/removal direction together with the pair of ridges 122m formed on the inner case 122 described above.

In addition, a pair of upper and lower through holes 100h is formed at a left end (a right end in FIG. 3) on a bottom surface of the insertion recess 100f. Note that the pair of projections 122n formed on the inner case 122 described above can be fit into the through holes 100h, is included in a locking mechanism P that locks the holder 100 so that the holder 100 does not unintentionally move in the left-right direction, and can position the holder 100. Specifically, the wall 100b of the holder 100 abuts on a right surface of the base 122a of the inner case 122 while the projections 122n of the inner case 122 fit into the through holes 100h (see FIG. 2) .

As illustrated in FIGS. 2 and 6B, while the mounting member 13 is held by the holder 100, the positive electrode terminal 14 and the negative electrode terminal 15 of the mounting member 13 are arranged side by side on a left end, that is, the wall 13b. Note that a distance between the walls 100b and 100c of the holder 100 in the left-right direction is the same as or slightly shorter than the sum of dimensions of the mounting member 13 in the left-right direction.

As illustrated in FIGS. 2, 6, and 7, the mounting member 13 is made of a resin material and mainly includes a base 13a and the walls 13b and 13c. As particularly illustrated in FIG. 7, in the mounting member 13, a pair of upper and lower substantially rectangular mounting portions 13d and 13e is formed at a right end (a left end in FIG. 6) in the base 13a. Elongated portions 14a and 15a of the positive electrode terminal 14 and the negative electrode terminal 15 are arranged in the mounting portions 13d and 13e, respectively, from the inner surface side of the base 13a and are insert-molded.

Note that, in the first embodiment, the positive electrode terminal 14 and the negative electrode terminal 15 are each formed by bending a metal piece into a substantially L shape. Moreover, a pair of upper and lower hook-shaped protrusions 13g is formed at each of two locations in the left-right direction at upper and lower ends of the mounting portions 13d and 13e. The protrusions 13g abut on the elongated portions 14a and 15a of the positive electrode terminal 14 and the negative electrode terminal 15, so that insertion progress of the elongated portions 14a and 15a of the positive electrode terminal 14 and the negative electrode terminal 15 can be defined in the mounting portions 13d and 13e.

In addition, a back surface of the power supply adjustment board 10 on a back side of the paper surface of FIG. 2 is electrically connected to the elongated portions 14a and 15a of the positive electrode terminal 14 and the negative electrode terminal 15. In this way, the positive electrode terminal 14 and the negative electrode terminal 15 are electrically connected to the terminals 10a and 10b of the power supply adjustment board 10 through a converter circuit.

Further, in the mounting member 13, the wall 13b is formed in a substantially elliptical shape rising from a left end of the base 13a toward an inner surface side. A pair of upper and lower notches 13h and 13k penetrating the wall 13b in the left-right direction is formed in the wall 13b. Note that, while the positive electrode terminal 14 and the negative electrode terminal 15 are inserted into slits formed in horizontally central portions of the notches 13h and 13k, as described above, the elongated portions 14a and 15a are arranged in the mounting portions 13d and 13e formed on the base 13a, respectively, and insert-molded.

Further, in the mounting member 13, the wall 13c is formed in a substantially elliptical shape rising from the right end of the base 13a toward the inner surface side. A notch 13m penetrating the wall 13c in the left-right direction is formed at a substantially vertically central portion of the wall 13c. As illustrated in FIG. 2, the electric wires 29 for connecting the terminals 10a and 10b of the power supply adjustment board 10 to the connector 27 are inserted into the notch 13m. Note that, in the first embodiment, the electric wires 29 are wired so as to have a sufficient bending allowance between the wall 13c and the terminals 10a and 10b of the power supply adjustment board 10 while being inserted into the notch 13m of the mounting member 13.

Next, a method of attaching and detaching the power supply unit 101 will be described. First, when mounting the power supply unit 101, the electric wires 29 extending from the connector 27 are connected to the terminals 10a and 10b of the power supply adjustment board 10 fixed to the mounting member 13 held by the holder 100, respectively.

Next, the power supply unit 101 is inserted from the opening 22a of the cover member 22 included in the housing 20. Specifically, insertion is performed while being guided by the guide portion G (see FIG. 5) including the recessed grooves 100g formed on the holder 100 and the pair of ridges 122m formed on the inner case 122, and the projections 122n formed on the inner case 122 are fit into the through holes 100h formed in the holder 100, thereby locking the power supply unit 101 in the housing 20 by the locking mechanism P (see FIG. 5).

Next, while the right end of the connector 27 connected to the power supply unit 101 is inserted through the through hole 23g of the cap member 23, the screw portion 23d of the cap member 23 is screwed to a screw portion (not illustrated) formed on the inner peripheral surface of the right end of the cover member 22. At this time, since the cap member 23 rotates relative to the connector 27, twisting of the electric wires 29 in the housing 20 is prevented.

Finally, the waterproof nut 28 is screwed from the right side to a screw portion (not illustrated) formed on the outer peripheral surface of the connector 27 exposed to the outside through the through hole 23g of the cap member 23.

When removing the power supply unit 101, first, the waterproof nut 28 that fixes the connector 27 to the cap member 23 is turned and removed, and then the cap member 23 is turned and removed from the right end of the cover member 22. At this time, since the cap member 23 rotates relative to the connector 27 as during mounting, twisting of the electric wires 29 in the housing 20 is prevented.

Next, the power supply unit 101 is removed together with the connector 27 and the electric wires 29 by gripping the grip portion 100d of the holder 100 and pulling out the power supply unit 101. At this time, by gripping the grip portion 100d of the holder 100, it is easy to apply force to the power supply unit 101 in a pull-out direction. As a result, a state in which the power supply unit 101 is locked in the housing 20 by the locking mechanism P (see FIG. 5) is easily released, so that the power supply unit 101 can be easily removed.

In this way, by locking the power supply unit 101 in the housing 20 using the locking mechanism P (see FIG. 5), the pressure sensor 1 can ensure a state of causing the positive electrode terminal 42 and the negative electrode terminal 43 of the housing 20 to electrically contact the positive electrode terminal and the negative electrode terminal of the power supply unit 101, that is, the positive electrode terminal 14 and the negative electrode terminal 15 of the mounting member 13 held by the holder 100. In addition, while the inside of the housing 20 in which the power supply unit 101 is accommodated is set to a sealed space by closing the opening of the housing 20, that is, the opening 22a of the cover member 22 using the cap member 23, the external power supply can be connected to the power supply adjustment board 10 accommodated in the housing 20 using the connector 27 and the electric wires 29 passing through the cap member 23 in a sealed state. Therefore, it is possible to achieve both stability of electrical contact between the positive electrode terminal 42 and the negative electrode terminal 43 of the housing 20 and the positive electrode terminal 14 and the negative electrode terminal 15 of the mounting member 13 held by the holder 100 and sealing performance inside the housing 20. In other words, in the present embodiment, electrical connection and sealing are achieved by separate means, so that these functions can be achieved with high accuracy.

Further, by locking the power supply unit 101 in the housing 20 using the locking mechanism P, the positive electrode terminal 42 and the negative electrode terminal 43 of the housing 20 and the positive electrode terminal 14 and the negative electrode terminal 15 of the mounting member 13 held by the holder 100 are brought into elastic contact with each other, and thus electrical contact is ensured, and power can be reliably supplied.

The power supply adjustment board 10 is detachably held by the holder 100 while being fixed to the mounting member 13. Therefore, the power supply adjustment board 10 can be protected by the mounting member 13.

In addition, as illustrated in FIG. 6A, the mounting member 13 is attached to the holder 100 in a direction perpendicular to a direction in which the holder 100 is inserted into the housing 20. Therefore, an operation of inserting the power supply unit 101 into the housing 20 has little effect on a holding state of the mounting member 13 with respect to the holder 100, and the mounting member 13 is stably held by the holder 100. Therefore, by locking the power supply unit 101 in the housing 20 using the locking mechanism P, a state in which the positive electrode terminal 42 and the negative electrode terminal 43 of the housing 20 and the positive electrode terminal 14 and the negative electrode terminal 15 of the mounting member 13 held by the holder 100 electrically contact each other is reliably maintained.

In addition, the electric wires 29 included in the power supply line are flexible, and when the cap member 23 is attached or detached, by bending the electric wires 29, it is possible to suppress occurrence of poor contact with the terminals 10a and 10b of the power supply adjustment board 10 or the connector 27, and workability of attaching and detaching the cap member 23 is excellent.

In addition, when the electric wires 29 are wired between the terminals 10a and 10b of the power supply adjustment board 10 and the wall 13c so as to be bendable while being inserted through the notch 13m of the mounting member 13, even if the electric wires 29 are pulled in response to the cap member 23 being attached or detached or the holder 100 being inserted or removed, poor contact or short circuit is less likely to occur.

In addition, as illustrated in FIG. 6, the walls 100b and 100c of the holder 100 each have a piece shape which is a cantilevered plate rising from both left and right ends of the base 100a by forming notch-shaped spaces on upper and lower sides. In this way, the walls 100b and 100c of the holder 100 can easily elastically sandwich the mounting member 13 in the longitudinal direction.

Moreover, the wall 100b is located between the positive electrode terminal 14 and the negative electrode terminal 15 of the mounting member 13, and thus supports the power supply unit 101 in a well-balanced manner. Furthermore, the positive electrode terminal 14 and the negative electrode terminal 15 of the mounting member 13 are less likely to be shortcircuited.

In addition, since the positive electrode terminal 14 and the negative electrode terminal 15 of the mounting member 13 do not protrude outward from the wall 100b, when the power supply unit 101 is attached and detached, the positive electrode terminal 14 and the negative electrode terminal 15 of the mounting member 13 are less likely to come into contact with other members.

In addition, the holder 100 has the wall 100b that abuts on the wall 13b of the mounting member 13, and the wall 100b is provided with notches that expose the positive electrode terminal 14 and the negative electrode terminal 15 of the mounting member 13. In this way, the positive electrode terminal 14 and the negative electrode terminal 15 of the mounting member 13 can be exposed from the notches provided on the wall 100b while the wall 100b abuts on the wall 13b of the mounting member 13. That is, longitudinal positions of the positive electrode terminal and the negative electrode terminal of the power supply unit 101 are regulated to predetermined positions. In this way, contact with the positive electrode terminal 42 and the negative electrode terminal 43 of the housing 20 can be ensured. Further, the power supply unit 101 can be made compact in the longitudinal direction.

In addition, the holder 100 has the pair of upper and lower claws 100e sandwiching the mounting member 13 in the lateral direction, that is, a direction in which the positive electrode terminal 14 and the negative electrode terminal 15 of the mounting member 13 are arranged side by side. In this way, the mounting member 13 can be held more stably by holding the mounting member 13 in the lateral direction in addition to the longitudinal direction using the holder 100. In this way, contact with the positive electrode terminal 42 and the negative electrode terminal 43 of the housing 20 can be made more reliably.

Moreover, since the holder 100 can be attached and detached while the pressure sensor 1 is installed in an installed portion such as a pipe, maintenance work, etc. can be easily performed. Specifically, maintenance work can be easily performed by removing only the cap member 23 and inserting/removing only the holder 100 holding the mounting member 13 without removing the entire housing 20 from the installed portion such as the pipe. In this way, since there is no need to touch or move the sensor unit 30 or the circuit unit 40 during maintenance work, the pressure sensor 1 can stably sense the measurement object. Furthermore, since there is no need to remove the pressure sensor 1 from the pipe, etc., there is no need to stop an operation of a fluid system having the pipe during maintenance work.

In addition, since the grip portion 100d is provided in the holder 100, by removing the cap member 23 and gripping the grip portion 100d of the holder 100, the power supply unit 101 can be easily removed from a state in which the power supply unit 101 is locked in the housing 20.

Note that the outer case 121 included in the housing 20 may be configured as a reverse screw so that the cover member 22 and the connection member 21 do not rotate together when the cap member 23 is removed, and may be configured so that fastening force between the cap member 23 and the cover member 22 is the weakest.

Further, it is sufficient that the positive electrode terminal and the negative electrode terminal of the power supply unit 101, that is, the positive electrode terminal 14 and the negative electrode terminal 15 of the mounting member 13 held by the holder 100 are arranged vertically, and horizontal positions thereof do not have to be the same.

Moreover, the mounting member 13, the positive electrode terminal 14, and the negative electrode terminal 15 are not limited to integral molding. For example, the elongated portions 14a and 15a of the positive electrode terminal 14 and the negative electrode terminal 15 may be fit and fixed to the mounting portions 13d and 13e formed on the base 13a of the mounting member 13.

### {Second embodiment}

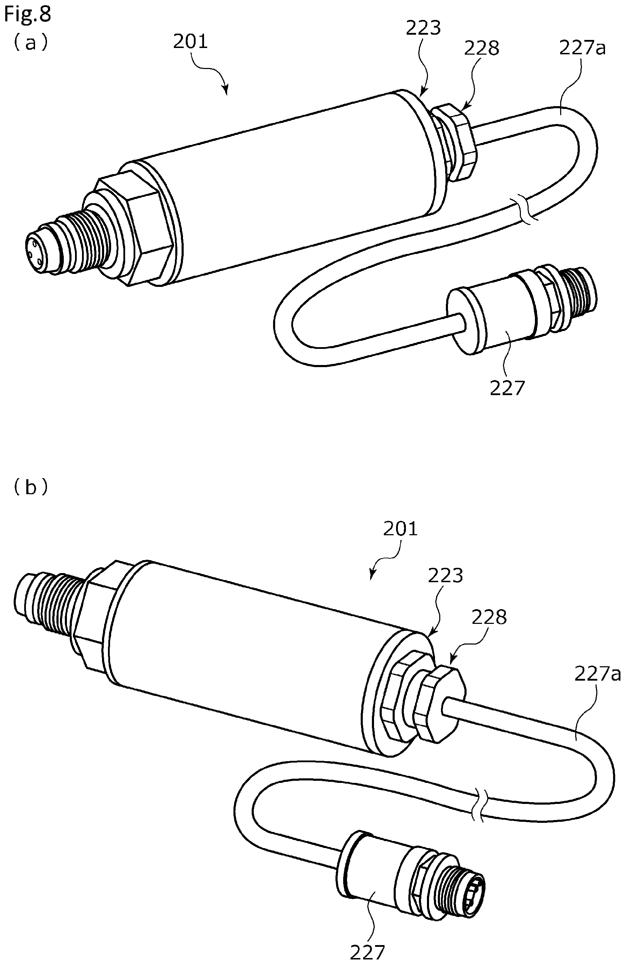

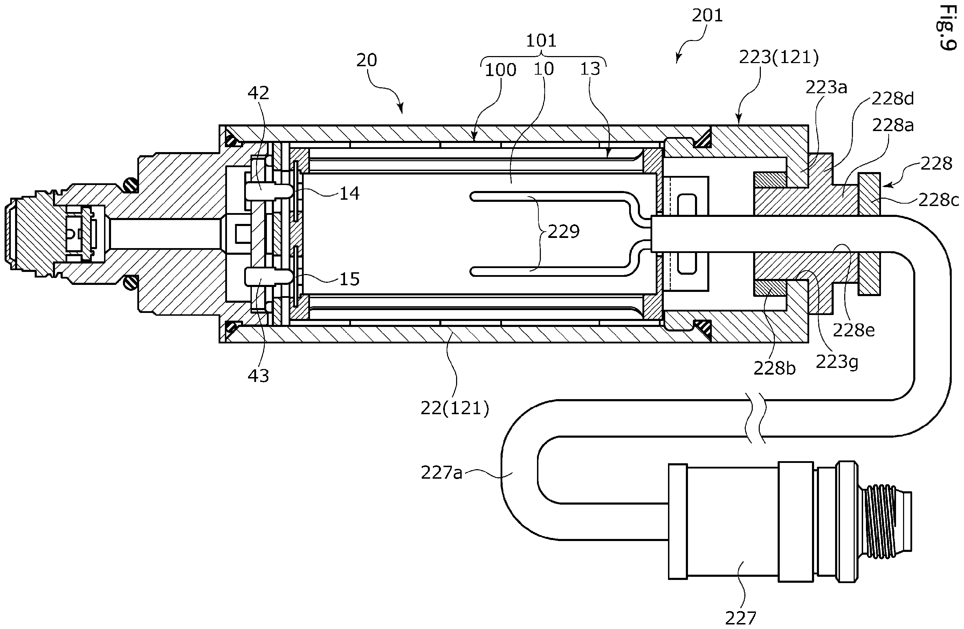

An electronic device according to a second embodiment of the present invention will be described with reference to FIGS. 8 and 9. Note that a description of an overlapping configuration that is the same as that of the first embodiment will be omitted.

As illustrated in FIGS. 8 and 9, a pressure sensor 201 as the electronic device of the second embodiment is different from the pressure sensor 1 of the first embodiment in that a connector 227 serving as a power supply line is extended to the outside of a cap member 223 by a cable 227a collectively covering electric wires 229 serving as power supply lines.

Specifically, as illustrated in FIG. 9, in the cap member 223, a through hole 223g penetrating a base 223a in the left-right direction is formed therein. A waterproof cable gland 228 (see FIG. 8) with the cable 227a inserted therein is attached to the through hole 223g. The cable gland 228 includes a gland body 228a, a lock nut 228b and a seal nut 228c.

Here, a method of attaching the cable gland 228 to the cap member 223 will be described. First, a left end of the gland body 228a is inserted from the right side into the through hole 223g of the cap member 223, and the lock nut 228b is screwed from the left side to a screw portion (not illustrated) formed on an outer peripheral surface of the left end of the gland body 228a. In this way, the base 223a of the cap member 223 is compressed between the lock nut 228b and the flange 228d formed on the gland body 228a, and the gland body 228a is attached to the cap member 223 in a substantially sealed manner. Note that, in this state, the cable 227a inserted into a through hole 228e penetrating the gland body 228a in the left-right direction is rotatable relative to the cap member 223 and the gland body 228a.

Next, the seal nut 228c is screwed from the right side to a screw portion (not illustrated) formed on an outer peripheral surface of a right end of the gland body 228a. Note that the seal nut 228c is previously inserted into the cable 227a before the cable 227a is inserted into the through hole 228e of the gland body 228a. By attaching the cable gland 228 in this manner, the cable 227a is fixed to the cap member 223 in a substantially sealed manner.

In this way, while the inside of the housing 20 in which the power supply unit 101 is accommodated is set to a sealed space by closing the opening of the housing 20, that is, the opening 22a of the cover member 22 using the cap member 223 to which the cable gland 228 is attached, the pressure sensor 201 can connect the external power supply to the power supply adjustment board 10 accommodated in the housing 20 using the cable 227a, the connector 227, and the electric wires 229 penetrating the cap member 223 in a sealed state. Therefore, it is possible to achieve both stability of electrical contact between the positive electrode terminal 42 and the negative electrode terminal 43 of the housing 20 and the positive electrode terminal 14 and the negative electrode terminal 15 of the mounting member 13 held by the holder 100 and sealing performance inside the housing 20.

### {Third embodiment}

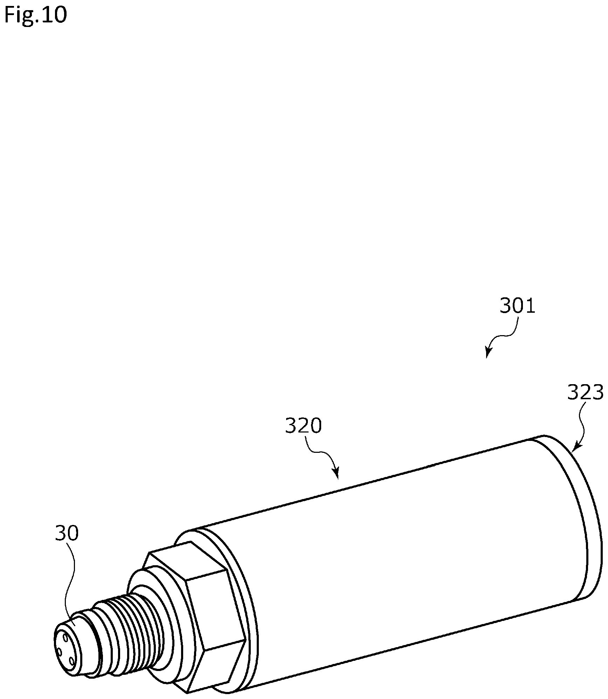

An electronic device according to a third embodiment of the present invention will be described with reference to FIGS. 10 to 12. Note that a description of an overlapping configuration that is the same as those of the first and second embodiments will be omitted.

A pressure sensor 301 as the electronic device of the third embodiment is different from the pressure sensors 1 of the first and second embodiments in that the power supply section is not a power supply adjustment board and is a battery.

As illustrated in FIGS. 10 to 12, the pressure sensor 301 of the third embodiment mainly includes a housing 320 different from that of the first and second embodiments in a cap member 323, and the sensor unit 30, the holder 100, and the circuit unit 40 (see FIG. 2), which are the same as those of the first and second embodiments.

Unlike the first and second embodiments, the cap member 323 in the third embodiment does not have a through hole in a base 323a.

Note that, in the third embodiment, a description will be given of a mode of holding a pack-type lithium battery 310 (hereinafter simply referred to as "battery 310") in which a positive electrode 310a and a negative electrode 310b are arranged side by side at one end in the longitudinal direction of the holder 100 and a spacer 313 formed of a resin material. Further, in the third embodiment, the holder 100 is included in the power supply unit 101 by holding the battery 310 and the spacer 313. Further, in the third embodiment, the positive electrode terminal and the negative electrode terminal of the power supply unit 101 are the positive electrode 310a and the negative electrode 310b of the battery 310.

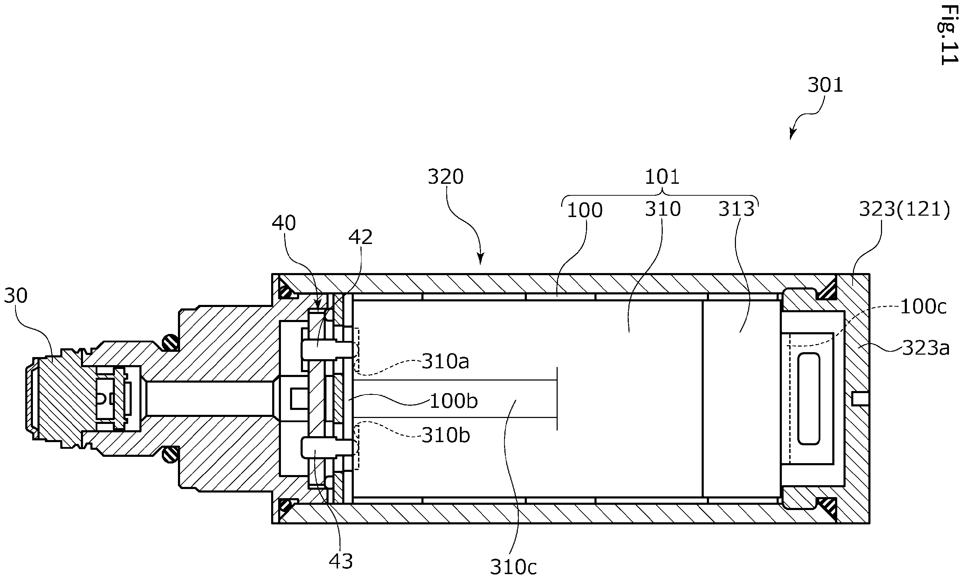

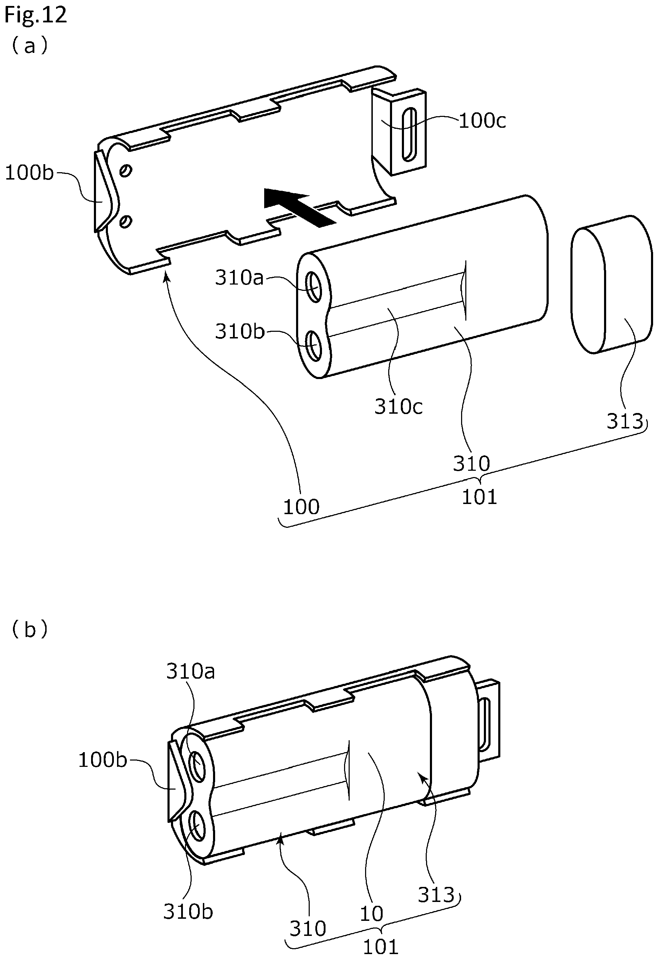

In addition, the first plate 122d in the inner case 122 has an inner surface curved along a surface shape of the battery 310 held by the holder 100 (see FIG. 3). In addition, the rectangular projection 122h formed at the left end (right end in FIG. 3) of the inner surface of the first plate 122d can be fit into a recess 310c (see FIGS. 11 and 12) formed on a surface of the battery 310. In this way, the insertion/removal direction of the holder 100 with respect to the inner case 122 is regulated, and reverse connection of the battery 310 can be prevented.

As illustrated in FIGS. 11 and FIG. 12B, while the battery 310 and the spacer 313 are held in the holder 100, the battery 310 has the positive electrode 310a and the negative electrode 310b arranged side by side at a left end, that is, one end in the longitudinal direction. In addition, the spacer 313 abuts on a right end of the battery 310, that is, the other end in the longitudinal direction and the wall 100c of the holder 100. Note that a distance between the walls 100b and 100c of the holder 100 in the left-right direction is the same as or slightly shorter than the sum of dimensions of the battery 310 in the left-right direction and dimensions of the spacer 313 in the left-right direction.

In this way, by locking the power supply unit 101 in the housing 20 using the locking mechanism P (see FIG. 5), the pressure sensor 301 can ensure a state in which the positive electrode terminal and the negative electrode terminal of the power supply unit 101, that is, the positive electrode 310a and the negative electrode 310b of the battery 310 held by the holder 100 are in electrical contact with the positive electrode terminal 42 and the negative electrode terminal 43 of the housing 320. Further, by covering the opening of the housing 320 with the cap member 323, the inside of the housing 320 in which the power supply unit 101 is accommodated can be set to a sealed space. Therefore, it is possible to achieve both stability of electrical contact between the positive electrode terminal 42 and the negative electrode terminal 43 of the housing 320 and the positive electrode 310a and the negative electrode 310b of the battery 310 held by the holder 100 and sealing performance inside the housing 320.

Further, in the third embodiment, the positive electrode 310a and the negative electrode 310b of the battery 310 held by the holder 100 can be used as the positive electrode terminal and the negative electrode terminal of the power supply unit 101 without change, and thus a structure of the spacer 313 can be simplified.

Further, in the third embodiment, the power supply section includes the battery and the spacer corresponding to the shape of the battery, and thus can hold the battery and the spacer having different shapes by the common holder 100 using the spacer corresponding to the shape of the battery used in the power supply unit 101. For example, the power supply unit 101 may be configured by holding a battery other than the above-mentioned pack-type lithium battery, for example, a button-type battery, an AA battery, an AAA battery, a square battery, or a coin-type battery, and a spacer corresponding to shapes of these batteries using the common holder 100.

Furthermore, in the present invention, the common holder 100 can be used to hold the mounting member 13 to which the power supply adjustment board 10 is fixed as in the first and second embodiments, or the battery 310 and spacer 313 as in the third embodiment. Therefore, the pressure sensor can selectively use the external power supply or the battery as a power supply according to an installation location, a usage environment, etc. by using a cap member according to the power supply section to be used.

Even though the embodiments of the present invention have been described above with reference to the drawings, the specific configuration is not limited to these embodiments, and any changes or additions within the scope not departing from the scope of the present invention are included in the present invention.

For example, the electronic device of the present invention is not limited to the pressure sensor, and may be applied to other sensors or electronic devices other than sensors as long as the electronic device uses a battery as a power supply.

In addition, a control chip or the wireless chip included in the circuit unit may be provided at any position on the circuit board.

Further, in the above-described embodiments, a description has been given of a mode in which the positive electrode terminal and the negative electrode terminal of the accommodation member are configured to be stretchable. However, the present invention is not limited thereto, and the positive electrode terminal and the negative electrode terminal of the power supply unit may be configured to be stretchable. Both the positive electrode terminal and negative electrode terminal of the accommodation member and the positive electrode terminal and negative electrode terminal of the power supply unit may be configured to be stretchable. For example, electrical contact points of the positive electrode terminal and the negative electrode terminal may protrude from notches provided on the wall 100b of the holder 100, respectively, by applying a configuration of a probe pin or a spring terminal to the positive electrode terminal 14 and the negative electrode terminal 15 of the mounting member 13 in the first and second embodiments.

Moreover, in the first and second embodiments, a description has been given of a mode in which the waterproof nut or the cable gland is used to allow the power supply line, to which the external power supply can be connected, to pass through the through hole of the cap member in a sealed state. However, the present invention is not limited thereto. For example, a gasket, etc. may be used to ensure sealing performance between the power supply line and the cap member.

Further, the mounting member to which the power supply adjustment board is fixed is not limited to being attachable and detachable with respect to the holder, and the mounting member and the holder may be integrally formed.

In addition, the power supply adjustment board may be directly held by the holder without the mounting member interposed therebetween. In this case, for example, the positive electrode terminal and the negative electrode terminal of the power supply unit electrically connected to the terminals of the power supply adjustment board may be vertically arranged side by side at one end of the power supply adjustment board in the longitudinal direction.

In addition, the locking mechanism P is not limited to being configured by fitting the projection of the inner case into the through hole of the holder, and may be configured by concave-convex fitting using a recess formed on the holder and a projection formed on the inner case. In addition, the locking mechanism may be configured by concave-convex fitting using a projection formed on the holder and a through hole or a recess formed on the inner case.

### {REFERENCE SIGNS LIST}

- 1: Pressure sensor (electronic device)
- 10: Power supply adjustment board (power supply section)
- 10a,: 10b Terminal
- 13: Mounting member
- 14: Positive electrode terminal (positive electrode terminal of power supply unit)
- 15: Negative electrode terminal (negative electrode terminal of power supply unit)
- 20: Housing (accommodation member)
- 21: Connection member
- 22: Cover member
- 22a: Opening (opening of accommodation member)
- 23: Cap member
- 23g: Through hole
- 27: Connector (power supply line)
- 28: Waterproof nut
- 29: Electric wire (power supply line)
- 30: Sensor unit
- 40: Circuit unit
- 41: Circuit board
- 42: Positive electrode terminal (positive electrode terminal of accommodation member)
- 43: Negative electrode terminal (negative electrode terminal of accommodation member)
- 44: Processing chip
- 45: Circuit board
- 46: Wireless chip
- 100: Holder
- 100b,: 100c Wall
- 100d: Grip portion
- 101: Power supply unit
- 201: Pressure sensor (electronic device)
- 223: Cap member
- 223g: Through hole
- 227: Connector (power supply line)
- 227a: Cable (power supply line)
- 228: Cable gland
- 228a: Gland body
- 228b: Lock nut
- 228c: Seal nut
- 229: Electric wire (power supply line)
- 301: Pressure sensor (electronic device)
- 310: Battery (power supply section)
- 310a: Positive electrode (positive electrode terminal of power supply unit)
- 310b: Negative electrode (negative electrode terminal of power supply unit)
- 313: Spacer (power supply section)
- 323: Cap member
- G: Guide portion
- P: Locking mechanism

## Claims

1. An electronic device, comprising:
a power supply unit including a power supply adjustment board and a holder that holds the power supply adjustment board;
an accommodation member that accommodates the power supply unit inserted from an opening of the accommodation member; and
a cap member that closes the opening of the accommodation member, wherein
a positive electrode terminal and a negative electrode terminal are arranged side by side in the accommodation member,
a positive electrode terminal and a negative electrode terminal are arranged side by side on one end side in the power supply unit,
the electronic device further comprises: a locking mechanism that locks the power supply unit in the accommodation member while the positive electrode terminal and the negative electrode terminal of the power supply unit are brought into electrical contact with the positive electrode terminal and the negative electrode terminal of the accommodation member; and
a power supply line disposed to penetrate the cap member in a sealed state and configured for connecting an external power supply to the power supply adjustment board.

2. The electronic device according to claim 1, wherein the power supply adjustment board is detachably held by the holder while being fixed to a mounting member on which the positive electrode terminal and the negative electrode terminal of the power supply unit are provided.

3. The electronic device according to claim 2, wherein the mounting member is attached to the holder in a direction perpendicular to a direction in which the holder is inserted into the accommodation member.

4. The electronic device according to any one of claims 1 to 3, wherein at least a part of the power supply line is flexible.

5. The electronic device according to any one of claims 1 to 3, wherein the holder has a grip portion.

6. An electronic device, comprising:
a power supply unit including a holder and a power supply section held by the holder;
an accommodation member that accommodates the power supply unit inserted from an opening of the accommodation member; and
a cap member that closes the opening of the accommodation member, wherein
a positive electrode terminal and a negative electrode terminal are arranged side by side in the accommodation member,
a positive electrode terminal and a negative electrode terminal are arranged side by side on one end side in the power supply unit,
the electronic device further comprises a locking mechanism that locks the power supply unit in the accommodation member while the positive electrode terminal and the negative electrode terminal of the power supply unit are brought into electrical contact with the positive electrode terminal and the negative electrode terminal of the accommodation member, and
the power supply section has a power supply adjustment board to which a battery or an external power supply is connected.

7. The electronic device according to claim 6, wherein the power supply section includes the battery and a spacer corresponding to a shape of the battery.
